# EUROPÄISCHE PATENTSCHRIFT

(11) **EP 0 967 253 B1**
(45) Veröffentlichungstag und Bekanntmachung des Hinweises auf die Patenterteilung: **24.11.2004**
(21) Anmeldenummer: 99111481.0
(22) Anmeldetag: 12.06.1999
(51) Int. Cl.: C09D 5/00, C09D 183/14, C09D 5/16

(54) **Antifoulingmittel, ein Verfahren zur Herstellung und deren Verwendung sowie daraus hergestellte Antifoulingbeschichtungen**
Anti-fouling agents, process for their preparation ,their use and anti-fouling coating compositions
Agents antisalissure, leur préparation, leur emploi et des compositions de revêtement antisalissure

(30) Priorität: 25.06.1998 DE 19828256
(43) Veröffentlichungstag der Anmeldung: 29.12.1999
(73) Patentinhaber: Bayer MaterialScience AG, 51368 Leverkusen (DE)
(72) Erfinder: Mechtel, Markus Dr., 50937 Köln (DE); Mager, Michael Dr., 51375 Leverkusen[ (DE); Käsler, Karl-Heinz, 51375 Leverkusen (DE)

(56) Entgegenhaltungen:
- WO-A-98/38251
- DE-A- 19 606 011
- US-A- 4 904 504

## Beschreibung

Die vorliegende Erfindung betrifft Antifoulingmittel, ein Verfahren zur Herstellung und deren Verwendung sowie daraus hergestellte Antifoulingbeschichtungen.

Antifoulingbeschichtungen dienen zum Schutz von Gegenständen vor Bewuchs, insbesondere von Schiffskörpern, Sieben, Netzen, Bauwerken, Kaianlagen und Signalanlagen, welche mit See- oder Brackwasser in Verbindung kommen.

Die Bewuchsbildung stellt insbesondere bei Schiffen ein großes Problem dar, da durch der Reibungswiderstand erhöht wird und infolge des gesteigerten Energieverbrauchs und häufigen Trockendockaufenthalten die Betriebskosten deutlich gesteigert werden. Aus diesem Grund werden Antifoulingbeschichtungen zur Verhinderung von Bewüchsen durch Algen, Seepocken, Röhrenwürmern, Muscheln oder anderen seit langem angewendet.

Man kann zwischen prinzipiell biozidhaltigen und biozidfreien Antifoulingbeschichtungen unterscheiden.

Antifoulingbeschichtungen, die Biozide enthalten, sind Stand der Technik. Durch die Biozide werden die bewuchsbildenden Organismen abgetötet. Übliche Antifoulingbiozide sind organische Zinnverbindungen oder auch Kupfer-, Antimon- und Wismutverbindungen. Der Nachtteil dieser Biozide ist ihre geringe Umweltverträglichkeit. Besonders problematisch sind schwermetallhalige Antifoulingbiozide, da diese eine Kontamination des Seewassers und des Seebodens, insbesondere im Bereich von Häfen verursachen.

Biozidfreie Antifoulingbeschichtungen besitzen Antihafteigenschaften, d.h. das Festsetzen von Meeresorganismen soll physikalisch verhindert werden. Stand der Technik sind zum Beispiel Antifoulingbeschichtungen auf Basis von Organosilikonflüssigkeiten, flüssigen Parafinen oder fluorierten Ölen in der Kombination mit Organopolysilikonpolymeren, insbesondere Silikonlastomeren (siehe US-A 5 298 060 und DE-A 26 01 928). Ebenfalls Stand der Technik sind Copolymere von organischen Polymeren und Silikonpolymeren. US-A 4 910 252 und WO 93 13179 beschreiben biozidfreie Antifouling-Beschichtungen, die Trialkoxysilangruppen-enthaltende Polymere, bevorzugt Acrylate und lineare Siloxanpolymere enthalten. EP 329 375 beansprucht eine Beschichtungszusammensetzung aus Silikonpolymeren und Polyurethan und/oder Polyharnstoff. WO 98 38251 beschreibt organisch anorganische Hybridmaterialien, hergestellt aus mindestens einem organischen Polymer, anorganischen (Nano)teilchen und polyfunktionellen Organosilanen.

Das Wirkprinzip der zitierten Antifoulingbeschichtungen basiert auf der geringen Oberflächenspannung silikonhaltiger Beschichtungen und/oder mehr oder weniger kontrollierten Freisetzung von Slip-Additiven, die das Festsetzen von Meeresorganismen verhindern sollen. Die Wirksamkeit solcher Antifoulingbeschichtungen ist jedoch begrenzt. Nachteilig ist weiterhin die geringe mechanische Belastbarkeit sowie häufig eine unzureichende Haftung auf Korrosionsschutzbeschichtungen, wodurch das Aufbringen einer zusätzlichen Primerschicht notwendig werden kann.

Der vorliegenden Erfindung liegt somit die Aufgabe zugrunde, verbesserte Antifoulingmittel bereitzustellen, die die genannten Nachteile bekannter Antifoulingmittel nicht aufweisen und deren Antifouling-Eigenschaften bereits ohne Biozide erreicht werden können.

Es wurde nun überraschenderweise gefunden, daß Antifoulingmittel, bestimmter Zusammensetzung, welche ein multifunktionelles Carbosilan und/oder -siloxan (A), sowie ein weiteres Alkoxysilan (B), ein Lösemittel (C), Katalysator (D), anorganische Nanopartikel (E) und gegebenenfalls weitere Zusatzstoffe (G) enthalten, die der Erfindung zugrunde liegende Aufgabe erfüllen.

Die erfindungsgemäßen Antifoulingmittel sind raumtemperturhärtend und zeichnen sich durch eine gute Haftung auf Korrosionsschutzbeschichtungen sowie einer hohen mechanischen Belastbarkeit aus. Eine zusätzliche Primerschicht ist somit nicht nötig. Sie zeigen bewuchsverhindernde Wirkung und schützen Gegenstände wirksam vor Bewuchs, insbesondere Schiffskörper, Siebe, Netze, Bauwerke, Kaianlagen und Signalanlagen, welche mit See- oder Brackwasser in Verbindung kommen.

Gegenstand der Erfindung sind daher Antifoulingmittel, bestehend aus 10-70 Gew.-%.
multifunktionelles Carbosilan und/oder -siloxan (A) der allgemeinen Formel I

Q[(CH₂)ₘSiR¹ ₙX₍₃₋ₙ₎]ₚ (I)

und/oder dessen (Teil)Kondensationsprodukt
mit
- R¹ =: C₁-C₁₈-Alkyl und/oder C₆-C₂₀-Aryl, wobei R¹ innerhalb des Moleküls gleich oder ungleich sein kann,
- X =: ein Rest ausgewählt aus der Gruppe OH, C₁-C₄-Alkoxy, C₆-C₂₀-Aryloxy oder C₁-C₆-Acyloxy, bevorzugt OH, Methoxy oder Ethoxy,
- n =: 0 bis 2
- m =: 2 bis 6
- p =: eine ganze Zahl ≥ 2 und
- Q =: entweder
ein lineares oder cyclisches Silan oder Siloxan, ein unsubstituierter Kohlenwasserstoff oder ein mit mindestens einem Mitglied der Gruppe O, N, S, P substituierter Kohlenwasserstoff,
10-40 Gew.-% Alkoxysilan (B),
20-60 Gew.-% organische Lösemittel (C) und/oder Wasser,
0,02-1,0 Gew.-% Katalysator (D),
3-15 Gew.-% anorganische Nanopartikel (E), und
0-30 Gew.-% weitere Zusatzstoffe (F) enthalten.

Multifunktionelle Carbosilane (A) im Sinne der Erfindung sind Silane der allgemeinen Formel II

R² ₄₋ₚSi[(CH₂)ₘSiR¹ ₙX'₍₃₋ₙ₎]ₚ (II)

oder deren Teilkondensationsprodukte,
wobei
- p =: 4, 3 oder 2, bevorzugt 4,
- X' =: ein Rest entspricht aus der Gruppe, C₁-C₄-Alkoxy, C₆-C₂₀-Aryloxy, bevorzugt Methoxy oder Ethoxy,
- R² =: C₁-C₁₈ Alkyl und/oder C₆-C₂₀-Aryl bedeuten und m, n und R¹
die zuvor angegebene Bedeutung haben.

In einer weiteren Ausführungsform der Erfindung sind die multifunktionellen Carbosiloxane (A), zusammengesetzt aus mindestens zwei Bausteinen, ausgewählt aus monofunktionellen Siloxan-Einheiten M der allgemeinen Formel R₃SiO₁₂, difunktionellen Siloxan-Einheiten D der allgemeinen Formel R₂SiO_{2/2} und/oder trifunktionellen Siloxan-Einheiten T der allgemeinen Formel RSiO_{3/2} sowie gegebenenfalls zusätzlich tetafunktionellen Siloxan-Einheiten Q der allgemeinen Formel SiO_{4/2} und/oder deren Kondensations- und/oder Teilkondensationsprodukte. Diese können mit mindestens einem Mitglied der Gruppe O, N, S, P substituiert sein. R hat dabei die Bedeutung von C₁-C₁₈ Alkyl und/oder C₆-C₂₀-Aryl, wobei R innerhalb des Moleküls gleich oder ungleich sein kann.

Die erfindungsgemäßen Siloxane weisen vorzugsweise ein Molekulargewicht (Zahlenmittel) zwischen 300 bis 5000 auf.

In einer bevorzugten Ausführungsform sind die multifunktionellen Carbosiloxane (A) Verbindungen der Formel III 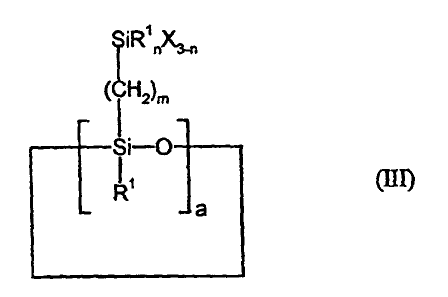 oder deren Teilkondensationsprodukte, wobei
- a =: 3 bis 6, bevorzugt 4, und
R¹, X, m und n die in Formel (I) angegebene Bedeutung haben.

Ganz besonders bevorzugt sind die im erfindungsgemäßen Antifoulingmittel enthaltenen multifunktionellen Carbosiloxane (A) Verbindungen der Formel (IV) und/oder (V) 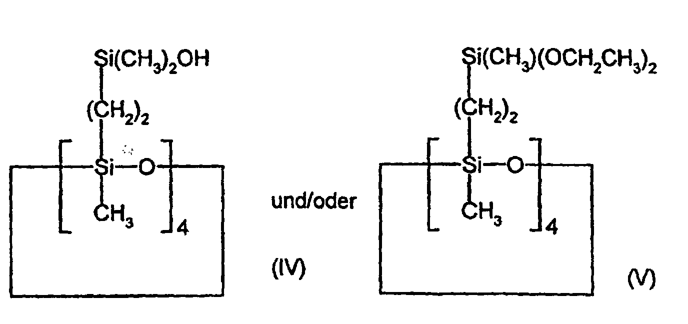 oder deren Teilkondensationsprodukte.

Die multifunktionellen Carbosilane und/oder -siloxane werden vorzugsweise nach den in DE-A 1 960 3241 und DE-A 1 971 1650 beschriebenen Verfahren durch Hydrosilylierung der entsprechenden Vinylverbindung mit einem Chlarsilari und nachfolgender Hydrolyse bzw. Alkoholyse hergestellt.

Die multifunktionellen Carbosilane (A) können auch heterocyclische Verbindungen, wie z. B die Verbindung der Formel (VI) 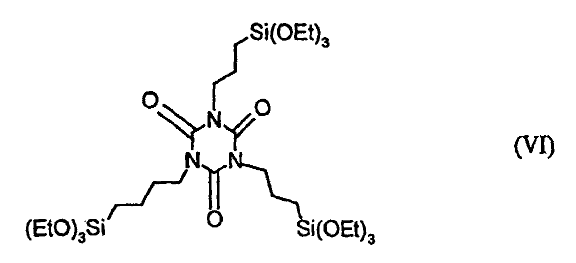 sein.

Dieses *Tris*-[3-(Trimethoxysilyl)propyl]isocyanurat (Formel VI) ist z.B. unter dem Handelsnamen Silquest® Y-11597 bei der Firma Witco erhältlich.

Ebenso können die multifunktionellen Carbosilane (A) Umsetzungsprodukte von bevorzugt aliphatischen Polyolen, wie z.B. 2,2-Bis-(hydroxymethyl)-1,3-propandiol), mit Silanen der Formel (VII)

ONC-(CH₂)ₘSiR¹ ₙX₍₃₋ₙ₎ (VII)

sein, wobei R', X, m und n die in Formel (I) genannte Bedeutung haben, und/oder Umsetzungsprodukte von bevorzugt aliphatischen Polyisocyanaten, wie Polyisocyanate auf Hexamethylendiaminbasis (HDI), mit Silanen der Formel (VIII)

H(R³)N-(CH₂)ₘSiR¹ ₙX₍₃₋ₙ₎ (VIII)

wobei R¹, X, m und n die in Formel (I) genannte Bedeutung haben und R³ ein C₁-C₄-Alkyrest bedeutet, sein.

Unter Kondensations- bzw. Teilkondensationsprodukten im Sinne der Erfindung werden solche Verbindungen verstanden, die z.B. durch Reaktion von 2 Resten X der allgemeinen Formel (I) unter Abspaltung von Wasser oder Alkohol entstehen.

Alkoxysilane (B) im Sinne der Erfindung sind Verbindungen der allgemeinen Formel (IX)

R⁴ _{b}SiY_{(4-b)} (IX)

mit
- R⁴ =: innerhalb des Moleküls gleiche oder verschiedene einwertige C₁-C₁₄-Alkyl- oder C₆-C₂₀-Arylreste, die gegebenenfalls mit einem Mitglied der Gruppe O, N, S, P substituiert sein können,
- Y =: eine hydrolysierbare Gruppe, bevorzugt C₁-C₈-Alkoxy oder C₂-C₈ Acyloxy, ganz besonders bevorzugt C₁-C₂-Alkoxy und
- b =: 0, 1, 2 oder 3, bevorzugt 0 oder 1
und/oder ein (Teil)Kondensationsprodukt mindestens eines Organosilans der Formel IX.

Als bevorzugtes Alkoxysilan (B) enthält das erfindungsgemäße Antifoulingmittel Tetraethoxysilan, Methyltrimethoxysilan und/oder Methyltriethoxysilan, ganz besonders bevorzugt Tetraethoxysilan bzw. ein (Teil)Kondensationsprodukt der genannten Silane, vorzugsweise von Tetraethoxysilan. Es können aber auch andere Silane der Formel IX, Mischungen solcher Silane, (Teil)Kondensationsprodukte dieser Silane oder (Teil)Kondensationsprodukte von Mischungen der genannten Silane verwendet werden. Beispiele für geeignete Silane der Formel IX sind Si(OR')₄, R''Si(OR')₃, R''Si(OOCR')₃ mit R' und R" unabhängig voneinander Methyl, Ethyl, (Iso)Propyl, (Iso)Butyl, (Iso)Pentyl, (Iso)Hexyl oder (Iso)Octyl. Besonders bevorzugt werden die Alkoxysilane (b) als (Teil)Kondensate eingesetzt.

Lösemittel (C) ist vorzugsweise ein wassermischbares organisches Lösemittel wie Isopropanol, gegebenenfalls im Gemisch mit Wasser, wobei letzeres bevorzugt ist.

Als Katalysatoren (D) können alle in der Siliconchemie bekannten Kondensationskatalysatoren, wie z.B. in W. Noll, Chemie und Technologie der Silikone, Kap. 5.4, S. 179, Verlag Chemie, Weinheim, 1968 beschrieben, verwendet werden. Bevorzugt wird als Katalysator eine Säure eingesetzt, besonders bevorzugt *para*-Toluolsulfonsäure.

Das erfindungsgemäße Mittel kann zusätzlich anorganische Nanopartikel (E) und/oder weitere Zusatzstoffe (F) enthalten.

Anorganische Nanopartikel (E) im Sinne der Erfindung sind z.B. Metall- oder Halbmetalloxide bzw. Oxidhydrate mit einem mittleren Teilchendurchmesser (Zahlenmittel) von 5 bis 100 nm, bevorzugt von 5 bis 50 nm, bestimmt mittels Ultrazentrifugation. Beispiele für die erfindungsgemäßen Nanopartikel sind Kieselsole (SiO₂), Böhmit-Sole (Al(O)OH) und/oder TiO₂-Sole. Die erfindungsgemäßen anorganischen Nanopartikel können auch in situ durch Hydrolyse geeigneter molekularer Vorstufen, wie z.B. der entsprechenden Metall- oder Übergangsmetallalkoholate bzw. -Acetylacetonate und/oder deren (Teil)hydrolysate hergestellt werden. Die anorganischen Nanopartikel können auch nach den bekannten Verfahren, z.B. durch die Umsetzung mit Hexamethyldisilazan, oberflächenmodifiziert sein. Besonders bevorzugt sind Kieselsole, dispergiert in einem organischen Lösemittel mit einer mittleren Teilchengröße (Zahlenmittel) von 5 bis 100 nm, ganz besonders bevorzugt mit einer mittleren Teilchengröße 5 bis 50 nm. Die Teilchengröße wurde dabei durch Ultrazentrifugation ermittelt.

Die erfindungsgemäßen Mittel können als weitere Zusatzstoffe (F) anorganische Pigmente, organische Pigmente, Farbstoffe, welche vorzugsweise in (See)Wasser nicht löslich sind, und/oder übliche Hilfsmittel wie Füllstoffe, Lösungsmittel, Weichmacher, Katalysatoren Inhibitoren, Haftmittel, Lackadditive und/oder gängige Dispergierhilfsmittel enthalten.

Es ist selbstverständlich auch möglich dem erfindungsgemäßen Mittel für den Antifoulingeinsatz bekannte Release- bzw. Slipadditive, wie Organosilikonflüssigkeiten, flüssige Parafine und/oder fluorierte Öle beizumischen.

Biozide wie z.B. Triazole, Imidazole, Naphthalin-Derivate etc. können dem Antifoulingmittel ebenfalls zugegeben werden. Die Vorteile der erfindungsgemäßen Mischung werden jedoch ohne diese bereits erreicht.

Das erfindungsgemäße Mittel wird vorzugsweise in organischen Lösemittel bereitgestellt. Es ist aber auch möglich, das erfindungsgemäße Mittel als wäßrige Formulierung herzustellen. In diesem Fall ist es vorteilhalft, wenn die in dem erfindungsgemäßen Mittel enthaltenen Komponenten (E) und (F) ebenfalls als wäßrige Formulierung zugegeben werden bzw. wenn sie mit dem wäßrigen Mittel kompatibel sind.

Ein weiterer Gegenstand der vorliegenden Erfindung ist die Herstellung des erfindungsgemäßen Mittels, wobei die Einzelkomponenten (A) bis (F) miteinander verrührt werden. Die Einzelkomponenten können dabei in beliebiger Reihenfolge nach den in der Lackindustrie bekannten Rühr- bzw. Dispergierverfahren miteinander verrührt werden, bis eine homogene Lösung bzw. Dispersion entstanden ist. Es erweist sich als vorteilhaft, wenn die Komponente (D) als letzte Komponente zugegeben wird und das Mittel vor der Applikation 30 bis 90 Minuten bei 15 bis 20°C gerührt wird. In einer bevorzugten Ausführungsform der Erfindung wird aus den Komponenten (B) bis (D) unter Zugabe von Wasser ein lagerstabiles Hydrolysat/Kondensat hergestellt. Für die Herstellung des Hydrolysats/Kondensats ist es bevorzugt, wenn pro Mol hydrolysierbarer Gruppe Y der Silane (B) mit der allgemeinen Formel (IX) 0,2 bis 0,7 mol, bevorzugt 0,4 bis 0,6 mol Wasser zugesetzt werden. Einzelheiten des Sol-Gel-Prozesses sind beispielsweise bei C.J. Brinker und W. Scherer in "Sol-Gel Science: The Physics and Chemistry of Sol-Gelb Processing", Academic Press, New York (1990), beschrieben. Das zur Herstellung des Hydrolysates eingesetzte Lösemittel (C) und der Reaktionsalkohol des Alkoxysilans (B) können nach Beendigung der Reaktion teilweise abdestilliert und/oder durch ein anderes Lösemittel ersetzt werden. In diesem Fall wird das Hydrolysat aus (B) bis (D) mit der Komponenten (A) sowie gegebenenfalls den Komponenten (E) und (F) homogen vermischt. Das Mittel kann sofort appliziert werden.

Zudem ist die Verwendung der erfindungsgemäßen Antifoulingmittel als Antifoulingbeschichtung sowie diese Antifoulingbeschichtung und deren Herstellung Gegenstand der Erfindung.

Die mit dem erfindungsgemäßen Mittel hergestellten Antifoulingbeschichtungen können als einziger bewuchsverhindernder Überzug oder Anstrich auf die zu schützende marine Oberfläche aufgetragen werden. Die zu schützenden marinen Oberflächen können auch mit einer Grundierung mit korrosionsverhindernden Anstrichmitteln versehen werden, bevor die mit dem erfindungsgemäßen Mittel hergestellte Antifoulingbeschichtung aufgebracht wird.

Das Aufbringen des erfindungsgemäßen Antifoulingmittels auf eine feste Unterlage erfolgt bevorzugt nach der Spritz-, Tauch-, Rollen- oder Streichtechnik.

### Beispiele

### Beispiel 1

In einem Becherglas werden zu 39,4 g eines (Teil)kondensationsproduktes von 1,3,5,7-Tetramethyl-1,3,5,7-tetra(2-diethoxymethylsilylethylen)cyclotetrasiloxan unter Rühren nacheinander 37,4 g Tetraethoxysilan (TEOS), 30 g Isopropanol und 8,2 g 0,1 n p-Toluolsulfonsäure gegeben. die Reaktionsmischung wird 60 min gerührt. Während der Reaktionszeit findet eine leicht exotherme Reaktion statt. Die Viskosität des erfindungsgemäßen Mittels beträgt bei 23°C 15 mPas, die Topfzeit beträgt ca. 16 Stunden.

### Beispiel 2

In einem Becherglas werden zu 24,5 g eines (Teil)kondensationsproduktes von 1,3,5,7-Tetramethyl-1,3,5,7-tetra(2-hydroxydimethyl-silylethylen)-cyclotetrasiloxan bei einer Temperatur von 19°C unter Rühren nacheinander 31,5 g Tetraethoxysilan (TEOS), 38,5 g Isopropanol und 5,3 g 0,1 n p-Toluolsulfonsäure gegeben. Die Reaktionsmischung wird 60 Minuten gerührt. Die Viskosität des erfindungsgemäßen Mittels beträgt bei 23°C 14 mPas, die Topfzeit beträgt ca. 5 Stunden.

### Beispiel 3

In einem Becherglas werden zu 18,7 g 1,3,5,7-Tetramethyl-1,3,5,7-tetra(2-hydroxydimethyl-silylethylen)-cyclotetrasiloxan bei einer Temperatur von 19°C unter Rühren nacheinander 12,1 g Tetraethoxysilan (TEOS), 29,6 g Isopropanol, 37,5 g Organosol (Bayer AG, 30 %ige kolloidale Lösung von Siliciumdioxid in Isopropanol) und 2,1 g 0,1 n p-Toluolsulfonsäure gegeben. Die Reaktionsmischung wurd 60 Minuten bei 19°C gerührt. Die Viskosität des erfindungsgemäßen Mittels beträgt bei 23°C 13 mPas, die Topfzeit betrug ca. 12 Stunden.

### Beispiel 4

### 4.1 Vorhydroysat

In einem Dreihalskolben mit Rührer, Innenthermometer, rückflußkühler und Tropfrichter werden 1667 g Tetraethoxysilan (TEOS) und 2041 g Ethanol vorgelegt und unter Rühren mit 291,5 g 0,1 n wäßriger 4-Toluolsulfonsäure versetzt. Die Reaktionstemperatur steigt auf ca. 50°C. Die Reaktionsmischung wird 24 Stunden gerührt. Das Hydrolysat ist in einem geschlossenen Gebinde bei Raumtemperatur mindestens 6 Monate lagerstabil.

### 4.2 Vorhydroysat

In einem Dreihalskolben mit Rührer, Innenthermometer, Rückflußkühler und Tropfrichter werden 114 g Tetraethoxysilan (TEOS), 330 g Organosol (Bayer AG, 30 %ige kolloidale Lösung von Siliciumdioxid in Isopropanol) und 337 g Ethanol vorgelegt und unter Rühren mit 20 g 0,1 n wäßriger 4-Toluolsulfonsäure vesetzt. Die Reaktionsmischung wird 24 Stunden gerührt. Das Hydrolysat ist in einem geschlossenen Gebinde bei Raumtemperatur mindestens 6 Monate lagerstabil.

### 4.3 Vorhydoysat

In einem Dreihalskolben mit Rührer, Innenthermometer, Rückflußkühler und Tropfrichter wird unter Rühren zu 500 g Tetraethoxysilan (TEOS) 87,4 g 0,05 n wäßrige 4-Toluolsulfonsäure zugegeben. Die Reaktionstemperatur steigt auf ca. 67°C. Nach ca. 25 Minuten klart das anfänglich trübe Reaktionsgemisch auf. Nachdem die Temperatur wieder auf 30°C gefallen ist, werden 100 g 1-Pentanol zugegeben und bei 60°C unter leichtem Vakuum Ethanol abdestilliert. Während der Destillation werden insgesamt weitere 200 g 1-Pentanol zugetropft. Das Hydrolysat wird mit 1-Pentanol auf 30 Gew.-% Festkörper eingestellt. Es ist in einem geschlossenen Gebinde bei Raumtemperatur mindestens 6 Monate lagerstabil.

### Beispiel 5

In einem Becherglas wrden unter Rühren 100 g Vorhydrolysat aus Beispiel 4.1 mit 66 g einer 75 %igen Lösung (w/w) eines (Teil)kondensationsproduktes von 1,3,5,7-Tetramethyl-1,3,5,7-tetra(2-hydroxydimethylsilylethylen)cyclotetrasiloxan in n-Butanol zusammengegeben. Das erfindungsgemäße Mittel kann sofort appliziert werden. Die Topfzeit beträgt ca. 45 Minuten.

### Beispiel 6

In einem Becherglas werden unter Rühren 100 g Vorhydrolysat aus Beispiel 4.1 mit 66 g eines (Teil)kondensationsproduktes von 1,3,5,7-Tetramethyl-1,3,5,7-tetra(2-diethoxymethylsilylethylen)cyclotetrasiloxan zusammengegeben. Das erfindungsgemäße Mittel kann sofort appliziert werden. Die Topfzeit beträgt ca. 12 Stunden.

### Beispiel 7

In einem Becherglas werden unter Rühren 100 g Vorhydrolysat aus Beispiel 4.2 mit 40 g einer 75 %igen Lösung (w/w) eines (Teil)kondensationsproduktes von 1,3,5,7-Tetramethyl-1,3,5,7-tetra(2-hydroxydimethylsilylethylen)-cyclotetrasiloxan in n-Butanol zusammengegeben. Das erfindungsgemäße Mittel kann sofort appliziert werden. Die Topfzeit beträgt ca. 12 Stunden.

### Beispiel 8

In einem Becherglas werden unter Rühren 60 g Vorhydrolysat aus Beispiel 4.3 mit 80 g eines (Teil)kondensationsproduktes von 1,3,5,7-tetramethyl-1,3,5,7-tetra(2-diethoxymethylsilylethylen)cyclotetrasiloxan und 18 g einer 0,1 molaren Lösung von 4-Toluolsulfonsäure in Ethanol zusammengegeben. Das erfindungsgemäße Mittel kann sofort appliziert werden. Die Topfzeit beträgt ca. 48 Stunden.

### Beispiel 9

In einem Dreihalskolben mit Magnetrührer, Innenthermometer, Rückflußkühler und Heizpilz wurden unter N₂-Atmosphäre 12,2 g (0,075 mol) Pentaerythrit, 74,1 g (0,3 mol) Dynasilan® A-1310 (Fa. Witco) und 100 g Methoxypropylacetat zusammengegeben. Die Reaktionsmischung wird 24 h bei 100°C gerührt. Es entsteht eine klare Lösung. Bei einem Druck von 10 mbar und einer Temperatur 140°C wird das Lösemittel abdestilliert. Das Produkt fiel als klare, hochviskose Flüssigkeit an.
Ausbeute: 59 g (70 % d. Th.)
Molmasse: 1124,15 g
¹H-NMR ([d6]-DMSO):
δ = 0,46 ppm (tr, 8H, SiC**H**₂CH₂CH₂NH), δ = 1,15 ppm (tr, 24H, OC**H**₂CH₃), δ = 1,45 ppm (m, 8H, SiCH₂C**H**₂CH₂NH), δ = 2,95 ppm (m, 8H, SiCH₂CH₂C**H**₂NH), δ = 3,74 ppm (q, 36H, OCH₂C**H**₃), d = 3,93 ppm (m, 8H, C**H**₂OC(O)NH), δ = 7,1 ppm (m, 4H, OC(O)N**H**CH₂).

### Beispiel 10

In einem Becherglas wurden zu 38,5g des in Beispiel 9 hergestellten multifunktionellen Carbosilans unter Rühren 10,0 g Tetraethoxysilan (TEOS), 24 g Isopropanol, 17,5 g Organosol (Bayer AG, 30 %ige kolloidale Lösung von Siliciumdioxid und Isopropanol) und 5,0 g 0,1 n p-Toluolsulfonsäure gegeben. Die Reaktionsmischung wird 60 Minuten bei 19°C gerührt. Die Viskosität des erfindungsgemäßen Mittels beträgt bei 23°C 13 mPas, die Topfzeit beträgt ca. 7 Stunden.

### Anwendungsbeispiele

Die erfindungsgemäßen Antifoulingmittel wurden durch Streichen bzw. pneumatisches Spritzen mit einem Spritzdruck von 4 bar und 2 Kreuzgängen auf 650 x 250 mm große Testplatten, die mit einem zinkhaltigen Epoxi-Korrosionsschutzgrund (erhältlich z.B. unter dem Handelsnamen Oldopox®377-0066, der Fa. Relius Coatings) in einer Trockenschichtdicke von 50 µm beschichtet waren, aufgebracht und 7 Tage bei Raumtemperatur getrocknet. Die Testplatten wurden auf einem Floß in Wilhelmshaven ausgelagert. Nach 3 Monaten war auf den Panels fast kein Fouling zu sehen. Fouling, wie Algen oder Barnacles, konnte durch leichtes Reiben mit einem Tuch entfernt werden.

Die erfindungsgemäßen Antifoulingbeschichtungen haben eine gute mechanische Beständigkeit, eine hohe Härte (Bleistifthärte 3 H bis 7 H) und haften sehr gut auf dem verwendeten Korrosionsschutzgrund.

## Patentansprüche

1. Antifoulingmittel bestehend aus
- 10 bis 70 Gew.-% eines multifunktionellen Carbosilans und/oder -siloxans (A),
- 10 bis 40 Gew.-% eines Alkoxysilans (B),
- 20 bis 60 Gew.-% mindestens eines Lösemittels (C),
- 0,02 bis 1,0 Gew.-% mindestens eines Katalysators (D),
- 3 bis 15 Gew.- % anorganische Nanopartikel (E),
und 0 bis 30 Gew.-% weiterer Zusatzstoffe (F),
mit der Maßgabe, daß die Summe der Komponenten (A) bis (F) 100 Gew.-% ergibt,
**dadurch gekennzeichnet, dass**
- das multifunktionelle Carbosilan und/oder -siloxan (A) der allgemeinen Formel I
Q[(CH₂)ₘSiR¹ ₙX₍₃₋ₙ₎]ₚ (I)
und/oder dessen (Teil)Kondensationsprodukt entspricht
mit
R¹ = C₁-C₁₈-Alkyl und/oder C₆-C₂₀-Aryl, wobei R¹ innerhalb des Moleküls gleich oder ungleich sein kann,
X = ein Rest ausgewählt aus der Gruppe OH, C₁-C₄-Alkoxy, C₆-C₂₀-Aryloxy oder C₁-C₆-Acyloxy,
n = 0 bis 2
m = 2 bis 6
p = eine ganze Zahl ≥ 2 und
Q = entweder
ein lineares oder cyclisches Silan oder Siloxan oder
ein unsubstituierter Kohlenwasserstoff oder ein mit mindestens einem Mitglied der Gruppe O, N, S, P substituierter Kohlenwasserstoff.

2. Antifoulingmittel nach Anspruch 1, **dadurch gekennzeichnet, daß** das multifunktionelle Carbosilan (A) ein Silan der Formel (II)
R² ₄₋ₚSi[(CH₂)ₘSiR¹ ₙX'₍₃₋ₙ₎]ₚ (II)
oder deren Teilkondensationsprodukt ist,
mit
p = 4, 3 oder 2, bevorzugt 4
m = 2 bis 6,
n = 0 bis 2,
R¹ = C₁-C₁₈ Alkyl und/oder C₆-C₂₀-Aryl, wobei R¹ innerhalb des Moleküls gleich oder ungleich sein kann,
R² = C₁-C₁₈-Alkyl und/oder C₆-C₂₀-Aryl und
X' = Methoxy oder Ethoxy ist.

3. Antifoulingmittel nach Anspruch 1, **dadurch gekennzeichnet, daß** das multifunktionelle Carbosiloxan (A) ein Siloxan ist, das aus mindestens zwei mono-, di- und/oder trifunktionellen und gegebenenfalls zusätzlichen tetrafunktionellen Siloxaneinheiten zusammengesetzt ist und/oder dessen Kondensations- oder Teilkondensationsprodukt.

4. Antifoulingmittel nach Anspruch 1, **dadurch gekennzeichnet, daß** das multifunktionelle Carbosiloxan (A) eine Verbindung der Formel (III) 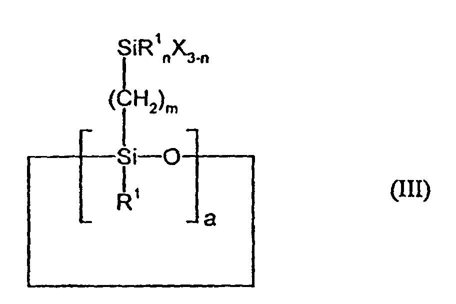 oder dessen (Teil)kondensationsprodukt,
wobei
a = 3 bis 6,
R¹, X, m und n die in Anspruch 1 genannte Bedeutung haben.

5. Antifoulingmittel nach Anspruch 1, **dadurch gekennzeichnet, daß** das multifunktionelle Carbosiloxan (A) eine Verbindung der Formel (IV) 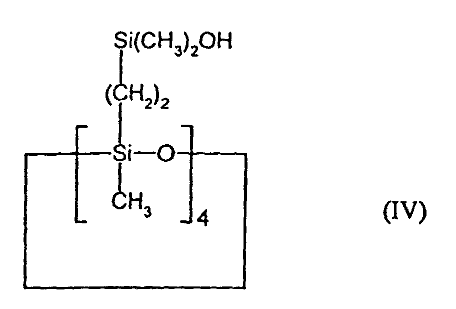 und/oder deren (Teil)kondensationsprodukt ist, und/oder eine Verbindung der Formel (V) 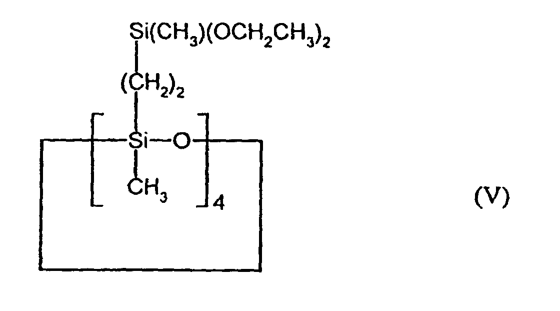 und/oder deren (Teil)kondensationsprodukt ist.

6. Antifoulingmittel nach einem oder mehreren der Ansprüche 1 bis 5, **dadurch gekennzeichnet, daß** das Alkoxysilan (B) mindestens ein Silan der Formel (IX)
R⁴ _{b}SiY_{(4-b)} (IX)
mit
R⁴ = innerhalb des Moleküls gleiche oder verschiedene einwertige C₁-C₁₄-Alkyl- oder C₆-C₂₀-Arylreste, die gegebenenfalls mit mindestens einem Mitglied der Gruppe O, N, S, P substituiert sind,
Y = eine hydrolysierbare Gruppe, bevorzugt C₁-C₈-Alkoxy oder C₂-C₈ Acyloxy,
b = 0, 1, 2 oder 3,
und/oder ein (Teil)Kondensationsprodukt mindestens eines Silans der Formel (IX) ist.

7. Antifoulingmittel nach einem oder mehreren der Ansprüche 1 bis 6, **dadurch gekennzeichnet, daß** das Alkoxysilan (B) Tetraethoxysilan oder ein Kondensationsprodukt von Tetraethoxysilan ist.

8. Antifoulingmittel nach einem oder mehreren der Ansprüche 1 bis 7, **dadurch gekennzeichnet, daß** der Katalysator (D) *para*-Toluolsulfonsäure ist.

9. Antifoulingmittel nach einem oder mehreren der Ansprüche 1 bis 8, **dadurch gekennzeichnet, daß** die anorganischen Nanopartikel (E) eine Kieselsoldispersion in einem organischen Lösemittel mit einem mittleren Teilchendurchmesser von 5 bis 100 nm sind.

10. Verfahren zur Herstellung von Antifoulingmitteln nach einem oder mehreren der Ansprüche 1 bis 9, **dadurch gekennzeichnet, daß** die Komponenten (A) bis (F) miteinander verrührt werden.

11. Verwendung der Antifoulingmittel nach einem oder mehreren der Ansprüche 1 bis 9 zur Herstellung von Antifoulingbeschichtungen.

12. Antifoulingbeschichtung, erhältlich durch Aufbringen des Antifoulingmittels nach einem oder mehreren der Ansprüche 1 bis 9 auf ein Substrat.

13. Verfahren zur Herstellung von Antifoulingbeschichtungen, **dadurch gekennzeichnet, daß** man das Antifoulingmittel nach einem oder mehreren der Ansprüche 1 bis 9 auf die zu schützenden Gegenstände aufbringt.

## Claims

1. Antifouling agent composed of
- from 10 to 70% by weight of a multifunctional carbosilane and/or carbosiloxane (A),
- from 10 to 40% by weight of an alkoxysilane (B),
- from 20 to 60% by weight of at least one solvent (C),
- from 0.02 to 1.0% by weight of at least one catalyst (D),
- from 3 to 15% by weight of inorganic nanoparticles (E),
and from 0 to 30% by weight of further additives (F),
with the proviso that the sum of the components (A) to (F) is 100% by weight,
**characterized in that**
- the multifunctional carbosilane and/or carbosiloxane (A) is of general formula I
Q[(CH₂)ₘSiR¹ ₙX₍₃₋ₙ₎]ₚ (I)
and/or a (partial) condensation product thereof
where
R¹ = C₁-C₁₈ alkyl and/or C₆-C₂₀ aryl, where R¹ may be identical or different within the molecule,
X = a radical selected from the group consisting of OH, C₁-C₄ alkoxy, C₆-C₂₀ aryloxy and C₁-C₆ acyloxy,
n = 0 to 2,
m = 2 to 6,
p = an integer ≥ 2, and
Q = either
a linear or cyclic silane or siloxane or
an unsubstituted hydrocarbon or a hydrocarbon substituted by at least one member of the group consisting of O, N, S and P.

2. Antifouling agent according to Claim 1, **characterized in that** the multifunctional carbosilane (A) is a silane of formula (II)
R² ₄₋ₚSi[(CH₂)ₘSiR¹ ₙX'₍₃₋ₙ₎]ₚ (II)
or a partial condensation product thereof,
where
p = 4, 3 or 2, preferably 4,
m = 2 to 6
n = 0 to 2,
R¹ = C₁-C₁₈ alkyl and/or C₆-C₂₀ aryl, where R¹ may be identical or different within the molecule,
R² = C₁-C₁₈ alkyl and/or C₆-C₂₀ aryl, and
X' = methoxy or ethoxy.

3. Antifouling agent according to Claim 1, **characterized in that** the multifunctional carbosiloxane (A) is a siloxane composed of at least two monofunctional, difunctional and/or trifunctional and optionally additional tetrafunctional siloxane units and/or a condensation product or partial condensation product thereof.

4. Antifouling agent according to Claim 1, **characterized in that** the multifunctional carbosiloxane (A) is a compound of formula (III) 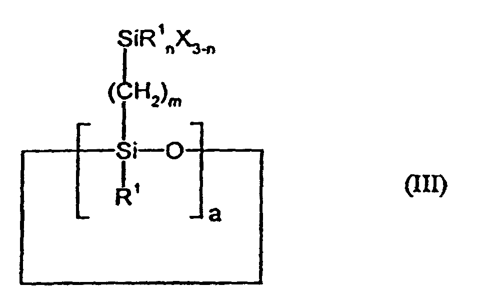 or a (partial) condensation product thereof,
where
a = 3 to 6,
R¹, X, m and n are as defined in Claim 1.

5. Antifouling agent according to Claim 1, **characterized in that** the multifunctional carbosiloxane (A) is a compound of formula (IV) 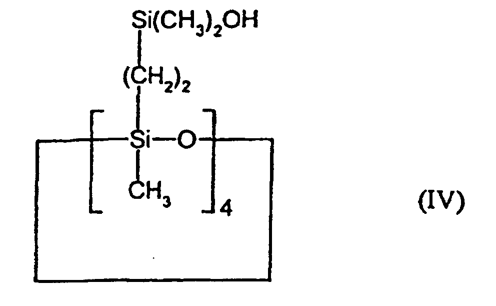 and/or a (partial) condensation product thereof, and/or a compound of formula (V) 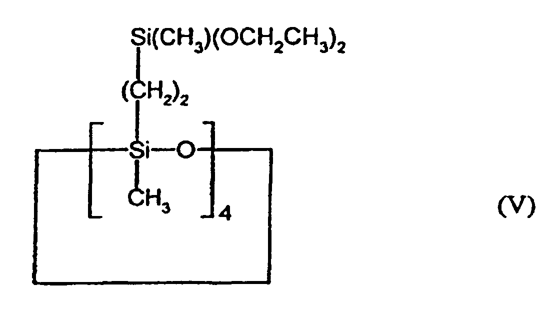 and/or a (partial) condensation product thereof.

6. Antifouling agent according to one of more of Claims 1 to 5, **characterized in that** the alkoxysilane (B) is at least one silane of formula (IX)
R⁴ _{b}SiY_{(4-b)} (IX)
where
R⁴ = monovalent C₁-C₁₄ alkyl or C₆-C₂₀ aryl radicals that are identical or different within the molecule and that are optionally substituted by at least one member of the group consisting of O, N, S and P,
Y = a hydrolyzable group, preferably C₁-C₈ alkoxy or C₂-C₈ acyloxy, and
b= 0, 1, 2 or 3,
and/or a (partial) condensation product of at least one silane of formula (IX).

7. Antifouling agent according to one or more of Claims 1 to 6, **characterized in that** the alkoxysilane (B) is tetraethoxysilane or a condensation product of tetraethoxysilane.

8. Antifouling agent according to one or more of Claims 1 to 7, **characterized in that** the catalyst (D) is para-toluenesulphonic acid.

9. Antifouling agent according to one or more of Claims 1 to 8, **characterized in that** the inorganic nanoparticles (E) are a dispersion in an organic solvent of a silica sol with an average particle diameter of 5 to 100 nm.

10. Method for producing antifouling agents according to one or more of Claims 1 to 9, **characterized in that** components (A) to (F) are stirred together with one another.

11. Use of the antifouling agents according to one or more of Claims 1 to 9 for producing antifouling coatings.

12. Antifouling coating obtainable by applying the antifouling agent according to one or more of Claims 1 to 9 to a substrate.

13. Method for producing antifouling coatings, **characterized in that** the antifouling agent according to one or more of Claims 1 to 9 is applied to the articles that are to be protected.

## Revendications

1. Agents antisalissure, constitués de
10 à 70 % en poids d'un carbosilane et/ou d'un carbosiloxane multifonctionnel (A),
10 à 40 % en poids d'un alcoxysilane (B),
20 à 60 % en poids d'au moins un solvant (C),
0,02 à 1,0 % en poids d'au moins un catalyseur (D),
3 à 15 % en poids de nanoparticules inorganiques (E),
et 0 à 30 % en poids d'autres additifs (F),
à condition que la somme des composants (A) à (F) donne 100 % en poids,
**caractérisés en ce que** le carbosilane et/ou le carbosiloxane multifonctionnel (A) correspond à la formule générale I
Q[(CH₂)ₘSiR¹ ₙX₍₃₋ₙ₎]ₚ (I)
et/ou à son produit de condensation (partiel)
avec
R¹ = un alkyle en C₁⁻C₁₈ et/ou un aryle en C₆-C₂₀, R¹ pouvant être identique ou différent à l'intérieur de la molécule,
X = un radical sélectionné dans le groupe formé de OH, alcoxy en C₁-C₄, aryloxy en C₆-C₂₀ ou acyloxy en C₁-C₆,
n = 0 à 2
m = 2 à 6
p = un nombre entier ≥ 2 et
Q = soit
un silane ou un siloxane linéaire ou cyclique, soit un hydrocarbure non substitué, soit un hydrocarbure substitué par au moins un membre du groupe O, N, S, P.

2. Agents antisalissure selon la revendication 1, **caractérisés en ce que** le carbosilane multifonctionnel (A) est un silane de la formule (II)
R² ₄₋ₚSi[(CH₂)ₘSiR¹ ₙX'₍₃₋ₙ₎]ₚ (II)
ou son produit de condensation partielle,
avec
p = 4, 3 ou 2, de préférence 4
m = 2 à 6,
n = 0 à 2,
R¹ = un alkyle en C₁-C₁₈ et/ou un aryle en C₆-C₂₀, R¹ pouvant être identique ou différent à l'intérieur de la molécule,
R² = un alkyle en C₁-C₁₈ et/ou un aryle en C₆-C₂₀,
X' = un méthoxy ou un éthoxy.

3. Agents antisalissure selon la revendication 1, **caractérisés en ce que** le carbosiloxane multifonctionnel (A) est un siloxane, qui est constitué d'au moins deux unités siloxane mono-, di- et/ou trifonctionnelles et le cas échéant, tétrafonctionnelles supplémentaires et/ou de son produit de condensation ou de condensation partielle.

4. Agents antisalissure selon la revendication 1, **caractérisés en ce que** le carbosiloxane multifonctionnel (A) est un composé de la formule (III) 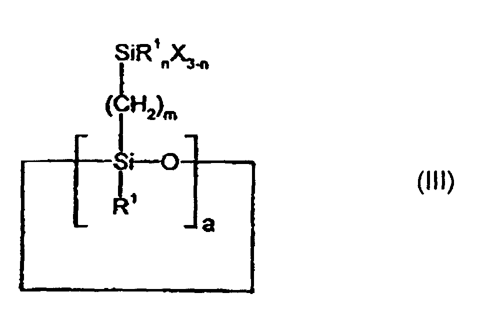 ou de son produit de condensation (partielle),
dans laquelle
a = 3 à 6,
R¹, X, m et n possèdent la signification mentionnée à la revendication 1.

5. Agents antisalissure selon la revendication 1, **caractérisés en ce que** le carbosiloxane multifonctionnel (A) est un composé de la formule (IV) 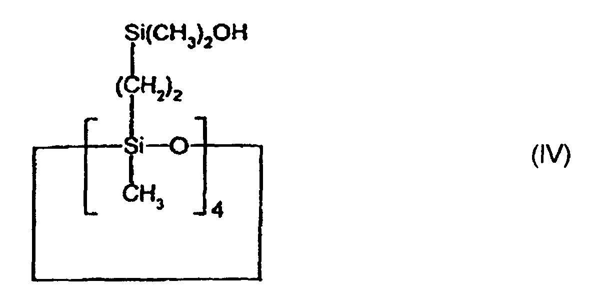 et/ou son produit de condensation (partielle), et/ou un composé de la formule (V) 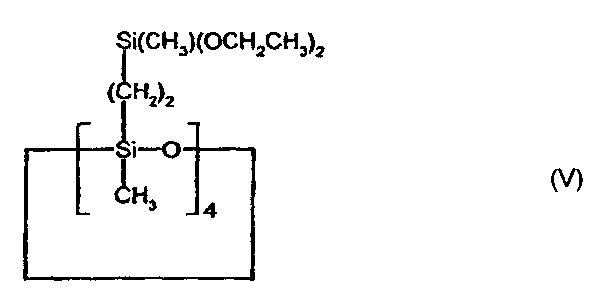 et/ou son produit de condensation (partielle).

6. Agents antisalissure selon une ou plusieurs des revendications 1 à 5, **caractérisés en ce que** l'alcoxysilane (B) est au moins un silane de la formule (IX)
R⁴ _{b}SiY_{(4-b)} (IX)
avec
R⁴ = des radicaux alkyle en C₁-C₁₄ ou aryle en C₆-C₂₀ monovalents, identiques ou différents à l'intérieur de la molécule, qui sont substitués le cas échéant par au moins un membre du groupe O, N, S, P,
Y = un groupe hydrolysable, de préférence un alcoxy en C₁-C₈ ou un acyloxy en C₂-C₈,
b = 0, 1, 2 ou 3,
et/ou un produit de condensation (partielle) d'au moins un silane de la formule (IX),

7. Agents antisalissure selon une ou plusieurs des revendications 1 à 6, **caractérisés en ce que** l'alcoxysilane (B) est un tétraéthoxysilane ou un produit de condensation de tétraéthoxylane.

8. Agents antisalissure selon une ou plusieurs des revendications 1 à 7, **caractérisés en ce que** le catalyseur (D) est l'acide *para*-toluènesulfonique.

9. Agents antisalissure selon une ou plusieurs des revendications 1 à 8, **caractérisés en ce que** les nanoparticules inorganiques (E) sont une dispersion de sol de silice dans un solvant organique avec un diamètre de particule moyen de 5 à 100 nm.

10. Procédé de préparation d'agents antisalissure selon une ou plusieurs des revendications 1 à 9, **caractérisé en ce que** les composants (A) à (F) sont agités ensemble.

11. Emploi des agents antisalissure selon une ou plusieurs des revendications 1 à 9, pour la préparation de revêtements antisalissure.

12. Revêtements antisalissure pouvant être obtenus par l'application de l'agent antisalissure selon une ou plusieurs des revendications 1 à 9 sur un substrat.

13. Procédé de préparation de revêtements antisalissure, **caractérisé en ce que** l'on applique l'agent antisalissure selon une ou plusieurs des revendications 1 à 9 sur les objets à protéger.
